# EUROPÄISCHE PATENTSCHRIFT

(11) **EP 3 049 298 B1**
(45) Veröffentlichungstag und Bekanntmachung des Hinweises auf die Patenterteilung: **07.08.2019**
(21) Anmeldenummer: 14757847.0
(22) Anmeldetag: 28.08.2014
(51) Int. Cl.: B60T 15/34, B60T 8/36, B60T 17/22

(54) **VENTILEINRICHTUNG**
VALVE APPARATUS
SYSTÈME DE VANNE

(30) Priorität: 24.09.2013 DE 102013015830
(43) Veröffentlichungstag der Anmeldung: 03.08.2016
(73) Patentinhaber: WABCO GmbH, 30453 Hannover (DE)
(72) Erfinder: COUPPEE, Ulrich, 31863 Coppenbruegge (DE); GENSINK, Jan, 30826 Garbsen (DE); KIEL, Bernd-Joachim, 31515 Wunstorf (DE)
(74) Vertreter: Lauerwald, Jörg
(86) Internationale Anmeldenummer: PCT/EP2014/002343
(87) Internationale Veröffentlichungsnummer: WO 2015/043710

(56) Entgegenhaltungen:
- EP-A1- 0 443 150
- EP-A1- 0 498 584
- EP-A2- 0 174 193
- EP-A2- 0 304 610
- EP-A2- 0 994 003
- WO-A1-91/09760
- DE-B3-102009 030 900
- JP-A- H0 858 546
- US-B1- 6 267 135

## Beschreibung

Die Erfindung betrifft eine Ventileinrichtung für eine druckbetätigte Anlage, insbesondere die Bremsanlage eines Kraftfahrzeugs, gemäß dem Oberbegriff des Anspruchs 1.

EP 0 994 003 B1 offenbart eine derartige Ventileinrichtung für eine druckbetätigte Kraftfahrzeugbremsanlage. Die bekannte Ventileinrichtung weist einen Druckmitteleingang auf, an den eine Druckquelle anschließbar ist. An einen Druckmittelausgang ist ein Verbraucher, beispielsweise ein auf die Räder des Fahrzeugs wirkender Bremszylinder. Der Druckmitteleingang ist von einem Relaisventil beherrscht, welches über einen Steuereingang der Ventileinrichtung betätigbar ist. Das Relaisventil umfasst einen Relaiskolben, welcher bei pneumatischer Betätigung über den Steuereingang einen Ventilring gegen die Rückstellkraft einer Ventilfeder zurückdrängt, wodurch der Druckmitteleingang freigegeben wird. Zwischen dem Relaisventil und dem Druckmittelausgang, das heißt dem an dem Druckmittelausgang angeschlossenen Verbraucher, ist ein druckbetätigbares Einlassventil angeordnet. Die bekannte Ventileinrichtung umfasst ferner ein druckbetätigbares Auslassventil, welches eine fluidische Verbindung des Druckmittelausgangs mit einer ins Freie führenden, das heißt mit der Umgebung der Ventileinrichtung verbundenen, Entlüftung der Ventileinrichtung beherrscht. Dieses Auslassventil ist als Membranventil ausgebildet und weist eine Ventilmembran als Verschlussglied auf, welche auf einem Ventilsitz aufliegt und gegen den Druck in einer Entlüftungskammer des Auslassventils und bei der bekannten Ventileinrichtung gegen die Rückstellkraft einer Ventilfeder öffnet. Wird das Auslassventil geöffnet, so wird der Druckmittelausgang und damit der zwischen dem Einlassventil und dem Verbraucher liegende Raum ins Freie entlüftet. Für die Entlüftung umfasst die bekannte Ventileinrichtung einen Druckmittelauslass, welche über einen Schalldämpfer ins Freie führt. Der Druckmittelauslass ist dabei auch mit dem Relaisventil fluidisch verbunden.

Dem druckbetätigbaren Auslassventil der bekannten Ventileinrichtung ist ein elektrisch betätigbares Entlüftungsventil zugeordnet, welches eine Vorsteuerung des Membranventils gewährleistet. Das elektrisch betätigbare Entlüftungsventil dient der Steuerung der Entlüftung des Auslassventils. Durch eine Entlüftung der Entlüftungskammer werden Druckverhältnisse an der Ventilmembran des Auslassventils geschaffen, welche das gewünschte Öffnen des Auslassventils zum Zweck der Entlüftung des Verbrauchers gewährleisten. Bei der bekannten Ventileinrichtung mündet eine Entlüftungsleitung, welche von dem elektrisch betätigbaren Entlüftungsventil beherrscht ist, in einen Druckmittelraum in Durchströmungsrichtung vor dem Einlassventil, so dass eine Entlüftung über das Relaisventil erfolgt.

Weitere Beispiele von derartigen Ventileinrichtungen sind aus der EP O 498 584 A1, sowie aus der WO 91/09760 A1, aus der JP H08/58546 A und aus der EP 0 304 610 A2 bekannt.

Für den Betrieb einer druckbetätigten Bremsanlage, insbesondere als Bestandteil eines Antiblockiersystems, ist eine möglichst rasche und vollständige Entlüftung des Auslassventils wünschenswert, so dass der volle Öffnungsquerschnitt des Auslassventils für die Entlüftung des Verbrauchers verfügbar ist. Es hat sich gezeigt, dass im Betrieb der bekannten Ventileinrichtung die Entlüftung des Auslassventils oft nicht schnell genug erfolgt, um den Anforderungen zu genügen. Bei Messungen der Entlüftungszeiten ist aufgefallen, dass die Entlüftungszeit der Bremszylinder, auch nach normalen Bremsvorgängen, zu lang ist.

Der vorliegenden Erfindung liegt die Aufgabe zugrunde, die Ventileinrichtung der gattungsgemäßen Art derart weiterzubilden, dass eine möglichst schnelle und vollständige Entlüftung der Membranventile gewährleistet ist.

Diese Aufgabe wird erfindungsgemäß durch eine Ventileinrichtung mit den Merkmalen des Anspruchs 1 gelöst.

Erfindungsgemäß ist vorgesehen, die Entlüftungsleitung eines Membranventils mit dem Steuereingang des Relaisventils fluidisch zu verbinden. Dabei kann sowohl das Einlassventil als auch das Auslassventil oder auch beide Ventilarten über den Steuereingang des Relaisventils entlüftet werden. Das wenigstens eine Membranventil (Einlassventil und/oder Auslassventil), welches erfindungsgemäß über den Steuereingang des Relaisventils entlüftet wird, weist eine Ventilmembran als Verschlussglied auf, welche auf einem Ventilsitz aufliegt und gegen den Druck in einer Entlüftungskammer des Einlassventils öffnet. Dem Membranventil ist ein elektrisch betätigbares Ventil zugeordnet, welches eine fluidische Verbindung der Entlüftungskammer des Einlassventils mit der ins Freie führenden Entlüftung beherrscht. Die aus Einlassventil und Auslassventil gebildete Ventilkombination zur Be- und Entlüftung des Verbrauchers kann somit über jeweils elektrisch betätigbare Ventile präzise vor gesteuert werden. Die elektrischen Ventile können Platz sparend in dem Gehäuse der Ventileinrichtung angeordnet werden.

Das Auslassventil wird somit nicht wie bei herkömmlichen Ventileinrichtungen über eine gemeinsame Entlüftung mit den Verbrauchern, das heißt den Bremszylindern, entlüftet. Vielmehr erfolgt eine Entlüftung des Auslassventils über den Steuereingang des Relaisventils. Der Erfindung liegt dabei die Erkenntnis zugrunde, dass bei einer Entlüftung des Auslassventils über einen gemeinsamen Lüftungskanal mit den Bremszylindern ein erheblicher Staudruck entsteht, welcher bei einer Entlüftung über den gemeinsamen Entlüftungskanal nur langsam abgebaut wird. Bei der erfindungsgemäßen Entlüftung über den Steuereingang des Relaisventils wirkt kein Staudruck entgegen, so dass der Druck in der Entlüftungsleitung des Auslassventils bzw. Einlassventils schnell und vollständig abfällt. Zur Entlüftung des Auslassventils bzw. Einlassventils ist nur ein geringes Volumen abzuführen, welches über den Steuereingang des Relaisventils ohne Bildung von Staudruck ohne weiteres entlüftet werden kann.

Ist die Entlüftungsleitung eines Einlassventils fluidisch mit dem Steuereingang des Relaisventils verbunden, so ist eine rasche Belüftung der Entlüftungskammer des Einlassventils unabhängig vom Staudruck vor dem Verbraucher möglich. Der Steuereingang stellt ein ohne weiteres hinreichendes Volumen bereit, um das geringe Volumen, welches für die Belüftung der Entlüftungskammer des Einlassventils benötigt wird, bereit zu stellen.

Bei einem Membranventil, dessen Entlüftungskammer erfindungsgemäß an den Steuereingang des Relaisventils angeschlossen ist, sind im Unterschied zur herkömmlichen Bauweise keine Ventilfedern zur Bereitstellung von Rückstellkraft erforderlich, da der Druck von dem Steuereingang immer schneller an der Membran anliegt als der entsprechende Druck auf der Gegenseite.

Die Membranventile weisen unterschiedliche Wirkflächen beiderseits der Ventilmembranen auf, so dass bei Druckausgleich eine resultierende Rückstellkraft aufgrund des Wirkflächenunterschieds die Ventilmembran am Ventilsitz anliegt. Beim Auslassventil sind die Wirkflächen beiderseits der Ventilmembran derart konfiguriert, das der erfindungsgemäß zur Entlüftungskammer des Auslassventils durchschaltbare Vorsteuerdruck am Steuereingang des Relaisventils das Auslassventil in Schließstellung hält.

Vorteilhaft weisen das Auslassventil und/oder das Einlassventil eine auf die Ventilmembran wirkende Ventilfeder auf und öffnen gegen die Rückstellkraft der Ventilfeder. Die Rückstellkraft, welche die auf die Ventilmembran wirkenden Druckkräfte beim Öffnen des Membranventils überwinden muss, wird dabei durch die Ventilfeder aufgebracht. Die Rückstellkraft des jeweiligen Membranventils ist in weiteren Ausführungsformen durch eine Kombination aus Kräften aufgrund eines Wirkflächenunterschieds und einer zusätzlichen Ventilfeder bestimmt.

In einer bevorzugten Ausgestaltung der Erfindung umfasst die Ventileinrichtung eine Arbeitsventileinrichtung, dessen Gehäuse das Relaisventil, den Steuereingang des Relaisventils und einen in den Steuereingang mündenden zweiten Abschnitt der erfindungsgemäßen Entlüftungsleitungen des wenigstens einen Membranventils (Einlassventile und / oder Auslassventile) umfasst. Außerdem weist die Ventileinrichtung wenigstens eine Steuerventileinrichtung auf, dessen Gehäuse einen Druckmittelausgang, das dem Druckmittelausgang zugeordnete Auslassventil, das dem Druckmittelausgang zugeordnete Einlassventil und die elektrisch betätigbaren Ventile, sowie die fluidische Verbindung jedes elektrisch betätigbaren Ventils mit der Entlüftungskammer des jeweils zugeordneten Membranventils (Einlassventil 23, Auslassventil 28) umfasst. In das Gehäuse der Steuerventileinrichtung sind dabei auch die ersten Abschnitte der erfindungsgemäßen Entlüftungsleitungen zu den elektrisch betätigbaren Ventilen zur Entlüftung der Membranventile integriert. Auf diese Weise ist eine kompakte Baugruppe gegeben, welche die Steuerung der Be- und Entlüftung von Verbrauchern in einer Bremsanlage eines Kraftfahrzeugs, insbesondere eines Antiblockiersystems, mit einem Relaisventil kombiniert. Die Gehäuse der Steuerventileinrichtung und der Arbeitsventileinrichtung können Platz sparend konfiguriert und zusammengesetzt werden.

In einer besonders bevorzugten Ausführungsform der Erfindung weist die Ventileinrichtung mehrere Steuerventileinrichtungen auf, welche an dieselbe Arbeitsventileinrichtung angeschlossen sind. Die jeweiligen Steuerventileinrichtungen wirken dabei in einer kompakten Baugruppe mit der Arbeitsventileinrichtung zusammen und werden von dort mit Druckluft versorgt. Die Auslassventile der jeweiligen Steuerventileinrichtungen werden erfindungsgemäß über den Steuereingang des Relaisventils der Arbeitsventileinrichtung entlüftet.

In einer Ventilanordnung mit mehreren Druckmittelausgängen zum Anschluss mehrerer Verbraucher können mehrere der Einlass- oder Auslassventile für den jeweiligen Druckmittelausgang als Membranventile ausgebildet sein und erfindungsgemäß über den Steuereingang des Relaisventils entlüftet sein. In einer vorteilhaften Ausführungsform ist jedes Auslassventil als Membranventil ausgebildet und die jeweilige Entlüftungsleitung mit dem Steuereingang des Relaisventils fluidisch verbunden.

In einer weiteren vorteilhaften Ausführungsform ist jedes Einlassventil als Membranventil ausgebildet und die jeweilige Entlüftungsleitung mit dem Steuereingang des Relaisventils fluidisch verbunden.

Das Auslassventil beherrscht mit seiner Ventilmembran eine Arbeitsleitung, welche im Gehäuse der jeweiligen Steuerventileinrichtung ausgebildet ist und eine Entlüftung über die ins Freie führenden Hauptentlüftung schafft. Die Hauptentlüftung ist dabei in dem Gehäuse der Arbeitsventileinrichtung ausgebildet, wobei die Arbeitsventileinrichtung Anschlüsse zur fluidischen Verbindung mit den Arbeitsleitungen der angeschlossenen Steuerventileinrichtungen aufweist.

Vorteilhaft sind die elektrisch betätigbaren Ventile der jeweiligen druckbetätigten Membranventile (Auslassventile und/oder Einlassventile) im Bereich der Kontaktfläche der Gehäuse der Steuerventileinrichtung und der Arbeitsventileinrichtung angeordnet, wodurch eine leichte Montage der elektrischen Ventile bei geringem Aufwand für die elektrische Versorgung gegeben ist. Besonders Vorteilhaft sind dabei die elektrischen Ventile der Auslassventile und die elektrischen Ventile der Einlassventile in einer Steuerkammer des Gehäuses der Steuerventileinrichtung angeordnet. Alle elektrischen Ventile können somit bei der Montage der Ventileinrichtung von der Kontaktfläche des Gehäuses der Steuerventileinrichtung eingeführt werden. Insbesondere kann dadurch der zwischen dem elektrischen Ventil und dem Steuereingang des Relaisventils liegende Abschnitt der erfindungsgemäßen Entlüftungsleitung ausschließlich in dem Gehäuse der Arbeitsventileinrichtung ausgebildet werden. Zur Herstellung der erfindungsgemäßen Ventileinrichtung sind daher kaum Änderungen in der Konfiguration der Steuerventileinrichtung gegenüber bekannten Ventileinrichtungen erforderlich, da die Entlüftungseinrichtungen für die Entlüftung des Auslassventils und/oder des Einlassventils jeder Steuerventileinrichtung überwiegend, beziehungsweise ausschließlich in dem Gehäuse der Arbeitsventileinrichtung angeordnet sind.

Die ins Freie führende Hauptentlüftung des Druckmittelausgangs ist vorteilhaft über einen Schalldämpfer am Gehäuse der Arbeitsventileinrichtung mit einer Umgebung des Gehäuses verbunden, so dass Geräuschentwicklung bei der Entlüftung größerer Volumina unterdrückt ist. Die Entlüftung der kleinen Volumina der Entlüftungskammern der Membranventile über den Steuereingang des Relaisventils ist von der Hauptentlüftung über den Schalldämpfer entkoppelt, so dass einerseits eine schnelle und vollständige Entlüftung des Auslassventils bzw. Belüftung des Einlassventils möglich ist und zugleich eine Unterdrückung der Geräuschentwicklung bei der Entlüftung der Bremszylinder.

Eine präzise Steuerung der Entlüftung / Belüftung der Membranventile ist bei Ausbildung der elektrisch betätigbaren Ventile als 3/2-Wegeventile gegeben. Bei kompakter Bauweise der Ventile können die 3/2-Wegeventile in einer gemeinsamen Ventilkammer untergebracht werden.

Bei einer Ausbildung des elektrisch betätigbaren Ventils als 3/2-Wegeventil mit einem Versorgungsanschluss und zwei alternativ schaltbaren Ausgängen ist der Versorgungsanschluss des Ventils mit der Entlüftungskammer des Auslassventils verbunden. Der erste Arbeitsanschluss des elektrisch betätigbaren Ventils ist an die ins Freie führende Hauptentlüftung angeschlossen und der zweite Arbeitsanschluss mit dem Steuereingang des Relaisventils fluidisch verbunden. Der Versorgungsanschluss des elektrisch betätigbaren Ventils ist daher alternativ über den ersten Arbeitsanschluss mit der ins Freie führenden Hauptentlüftung oder über den zweiten Arbeitsanschluss mit dem Steuereingang des Relaisventils verbindbar. Auf diese Weise kann das elektrisch betätigbare Ventil durch willkürliche elektrische Ansteuerung zwischen zwei Ventilstellungen umgeschaltet werden. In einer ersten, geschlossenen (unbestromten) Ventilstellung des elektrisch betätigbaren Ventils wird der Druck am Steuereingang des Relaisventils in die Entlüftungskammer des Auslassventils durchgeschaltet, wodurch die Entlüftungskammer des Auslassventils rasch entlüftet wird. Die Ventilmembran des Auslassventils wird durch die auf die Ventilmembran wirkende Rückstellkraft, welche durch unterschiedliche Wirkflächen beiderseits der Ventilmembran und/oder eine Ventilfeder erzeugt ist, in Schließstellung gehalten. In der zweiten Ventilstellung wird das elektrische Entlüftungsventil bestromt und verbindet die Entlüftungskammer des Auslassventils mit der ins Freie führenden Hauptentlüftung, insbesondere über die in die Hauptentlüftung mündende Arbeitsleitung der jeweiligen Steuerventileinrichtung. In dieser Ventilstellung des elektrisch betätigbaren Ventils gibt das Auslassventil unter dem Druck am Druckmittelausgang, das heißt vor dem Verbraucher, nach und öffnet.

In entsprechender Weise ist bei einem 3/2-Wege-Ventil zur Entlüftung des Einlassventils der Versorgungsanschluss mit der Entlüftungskammer des Einlassventils verbunden. Einer der Arbeitsanschlüsse ist mit dem Steuereingang des Relaisventils fluidisch verbunden und der andere Arbeitsanschluss mit der ins Freie führenden Hauptentlüftung.

Ausführungsbeispiele der Erfindung sind nachstehend anhand der Zeichnung näher erläutert. Es zeigen:
- Fig. 1: eine geschnittene Ansicht eines ersten Ausführungsbeispiels einer Ventileinrichtung,
- Fig. 2: eine geschnittene Ansicht eines zweiten Ausführungsbeispiels einer Ventileinrichtung,
- Fig. 3: eine geschnittene Ansicht eines dritten Ausführungsbeispiels einer Ventileinrichtung.

Für gleiche Bauteile sind in sämtlichen Ausführungsbeispielen die jeweils gleichen Bezugszeichen angegeben.

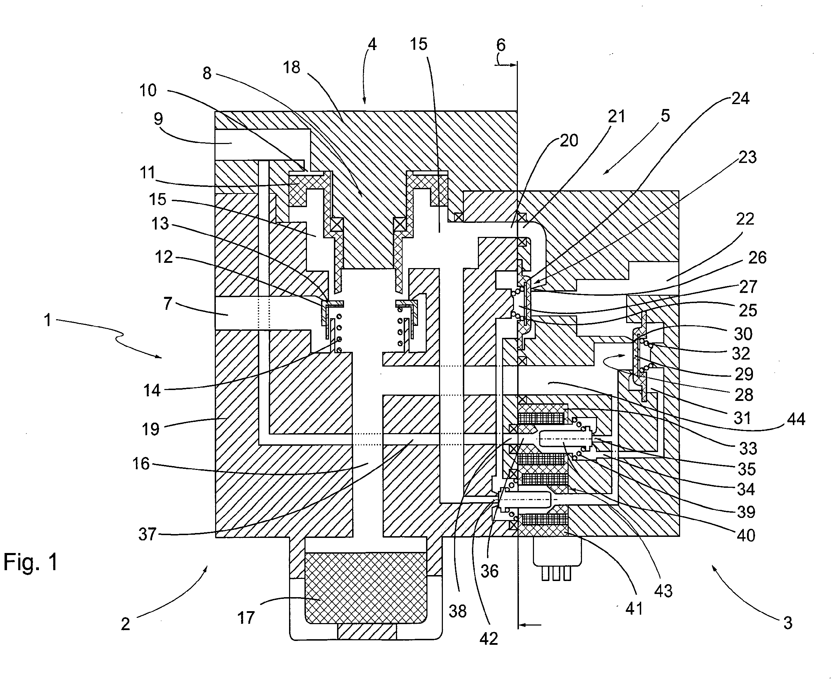

Fig. 1 zeigt eine Ventileinrichtung 1 für eine druckbetätigte Bremseinrichtung eines Kraftfahrzeugs. Die Ventileinrichtung 1 wird bei einer Bremsanlage mit einem Antiblockiersystem (ABS) verwendet. Die Ventileinrichtung weist eine Arbeitsventileinrichtung 2 und eine Steuerventileinrichtung 3 auf, deren jeweiligen Gehäuse 4, 5 zu einer Baueinheit zusammengefasst sind. Das Gehäuse 4 der Arbeitsventileinrichtung 2 und das Gehäuse 5 der Steuerventileinrichtung 3 sind an einer gemeinsamen, ebenen Kontaktfläche 6 zusammengefügt.

Die Arbeitsventileinrichtung 2 weist einen Druckmitteleingang 7 auf, an den eine nicht dargestellte Druckquelle anschließbar ist. Die Arbeitsventileinrichtung 2 weist außerdem ein Relaisventil 8 auf, welches den Druckmitteleingang 7 beherrscht und über einen Steuereingang 9 druckbetätigbar ist. Der Druck im Steuereingang 9 wirkt in einer Steuerkammer 10 auf einen längsbeweglich angeordneten Relaiskolben 11. Der Relaiskolben 11 ist das Betätigungsmittel für das Ventilglied des Relaisventils 8 welches als Ventilring 12 ausgebildet ist und auf einem Ventilsitz 13 von einer Ventilfeder 14 in Schließstellung gehalten ist. Der Ventilring 12 trennt in Schließstellung des Relaisventils 8 den Druckmitteleingang 7 von einer Druckmittelkammer 15, welche der Relaiskolben 11 auf seiner der Steuerkammer 10 gegenüberliegenden Seite begrenzt. Über den Innendurchmesser des Ventilrings 12 ist eine ins Freie führende Entlüftung 16 im Gehäuse 4 ausgebildet. Die Entlüftung 16 reicht durch die Wand des Gehäuses 4 ins Freie, so dass Druckmittel über einen Schalldämpfer 17 am Gehäuse 4 der Arbeitsventileinrichtung 2 abgeführt werden kann.

Das Gehäuse 4 der Arbeitsventileinrichtung 2 ist im Ausführungsbeispiel zweiteilig ausgebildet, wobei ein Deckel 18 den Relaiskolben 11 führt und auf dem Unterteil 19 des Gehäuses 4 montiert ist.

Über die entsprechende Einstellung des Vorsteuerdrucks am Steuereingang 9 des Relaisventils 8 ist die Druckmittelkammer 15 mit dem Druckmitteleingang 7 oder mit der Entlüftung 16 fluidisch verbindbar oder gegen beide absperrbar.

Die Druckmittelkammer 15 weist im Bereich der Kontaktfläche 6 des Gehäuses 4 einen Anschluss 20 auf, welcher mit einem Eingangsanschluss 21 der Steuerventileinrichtung 3 fluchtet. Die Steuerventileinrichtung 3 weist einen Druckmittelausgang 22 auf, an den ein Verbraucher, insbesondere ein Bremszylinder eines Kraftfahrzeugs anschließbar ist. Eine fluidische Verbindung zwischen dem Eingangsanschluss 21 der Steuerventileinrichtung 3 und dem Druckmittelausgang 22 wird durch ein als Membranventil ausgebildetes Einlassventil 23 beherrscht. Das Einlassventil 23 umfasst eine Ventilmembran 24 als Ventilglied, welche im Bereich der Kontaktfläche 6 zwischen den Gehäusen 4, 5 eingespannt ist. Die Ventilmembran ist flexibel und wird von einer Ventilfeder 25 in Schließstellung an einem Ventilsitz 26 gehalten. Die Ventilmembran 24 begrenzt dabei eine Entlüftungskammer 27. Übersteigt der Druck in der Druckmittelkammer 15 den Druck in der Entlüftungskammer 27 um ein derartiges Maß, dass auch die Ventilfeder 25 überwunden wird, so gibt das Einlassventil 23 die fluidische Verbindung zum Druckmittelausgang 22 frei, wodurch der angeschlossene Verbraucher betätigt wird.

Die Steuerventileinrichtung 3 umfasst ein ebenfalls als Membranventil ausgebildetes, dem Einlassventil 23 in Betätigungsrichtung zum Verbraucher nachgeordnetes Auslassventil 28. Das Auslassventil 28 weist eine Ventilmembran 29 auf, welche in Schließstellung des Auslassventils 28 auf einem Ventilsitz 30 aufliegt und eine Arbeitsleitung 44 verschließt, welche im Gehäuse 5 der Steuerventileinrichtung 3 ausgebildet ist und in die Hauptentlüftung 16 der Arbeitsventileinrichtung 2 mündet. Die Arbeitsleitung 44 bildet somit eine fluidische Verbindung zwischen dem Druckmittelausgang 22 und der Hauptentlüftung 16, welche von dem Auslassventil 28 verschlossen ist und bei Öffnen des Auslassventils 28 frei gegeben ist.

Die Ventilmembran 29 verschließt eine Entlüftungskammer 31 des Auslassventils 28, wobei der statische Druck in der Entlüftungskammer 31 schließend auf das Auslassventil 28 wirkt. Wird die Entlüftungskammer 31 entlüftet, so öffnet das Auslassventil 28 und ermöglicht eine Entlüftung des Druckmittelausgangs 22, beziehungsweise der an dem Druckmittelausgang 22 angeschlossenen Verbraucher. Das Auslassventil 28 weist dabei unterschiedlich große Wirkflächen beiderseits der Ventilmembran 29 auf, wodurch statischer Druck auf die jeweiligen Wirkflächen unterschiedliche Kräfte erzeugt. Das Auslassventil 28 öffnet somit gegen eine Rückstellkraft, welche der Druck in der Entlüftungskammer 31 über die Wirkfläche der Ventilmembran auf der Seite der Entlüftungskammer 31 erzeugt. Im gezeigten Ausführungsbeispiel weist das Auslassventil 28 ferner eine Ventilfeder 32 auf, welche die Ventilmembran 29 in Richtung des Ventilsitzes 30 beaufschlagt und eine zusätzliche Rückstellkraft erzeugt, welche zum Öffnen des Membranventils überwunden werden muss. Das Auslassventil 28 öffnet somit gegen den Druck in der Entlüftungskammer 31 und die Rückstellkraft der Ventilfeder 32.

Dem Auslassventil 28 ist ein elektrisch betätigbares Ventil 33 zugeordnet, welches als 3/2-Wegeventil ausgebildet ist. Ein Versorgungsanschluss 34 des elektrisch betätigbaren Ventils 33 ist alternativ über einen ersten Arbeitsanschluss 35 mit der ins Freie führenden Hauptentlüftung 16 oder über einen zweiten Arbeitsanschluss 36 mit dem Steuereingang 9 des Relaisventils 8 fluidisch verbindbar. Hierzu ist der erste Arbeitsanschluss 35 mit der Arbeitsleitung 44 verbunden. An den zweiten Arbeitsanschluss 36 des elektrisch betätigbaren Ventils 33 ist eine Entlüftungsleitung 37 angeschlossen, welche in den Steuereingang 9 mündet.

Die Entlüftungsleitung 37 ist im Gehäuse 4 der Arbeitsventileinrichtung 2 ausgebildet und weist einen Anschluss 38 im Bereich der Kontaktfläche 6 auf, welche in Einbaulage des elektrisch betätigbaren Ventils 33 in Überdeckung mit dem zweiten Arbeitsanschluss 36 liegt, so dass eine fluidische Verbindung besteht. In der gezeigten, unbestromten Stellung des elektrisch betätigbaren Ventils 33 besteht eine fluidische Verbindung zwischen der Entlüftungskammer 31 des Auslassventils 28 und dem Steuereingang 9 des Relaisventils 8, so dass der im Steuereingang 9 herrschende Vorsteuerdruck in die Entlüftungskammer 31 des Auslassventils 28 durchgeschaltet ist. Der Vorsteuerdruck hält dabei das Auslassventil 28 in Schließstellung. Die Wirkfläche der Ventilmembran 29 ist dabei auf der Seite der Entlüftungskammer 31 größer als auf der Seite der Arbeitsleitung 44, so dass ein Öffnen des Auslassventils 28 und damit eine Entlüftung der Verbraucher erst dann erfolgt, wenn die Rückstellkraft überwunden ist, welche der Vorsteuerdruck in der Entlüftungskammer 31 über die größere der beiden Wirkflächen der Ventilmembran 29 erzeugt.

Im gezeigten Ausführungsbeispiel weist das Auslassventil 28 eine zusätzliche Ventilfeder 39 auf, welche eine Rückstellkraft in Richtung des Ventilsitzes 30 ausübt. In dieser Ventilstellung können die an den Druckmittelausgang 22 angeschlossenen Verbraucher betätigt werden.

Über die Entlüftungsleitung 37 kann die Entlüftungskammer 31 des Auslassventils 28 sehr schnell und unabhängig von der Entlüftung des Druckmittelausgangs 22 entlüftet werden, so dass bei einem Entlüftungswunsch der volle Ventilquerschnitt zur Verfügung steht.

Dem ebenfalls als Membranventil ausgebildeten Einlassventil 23 ist ein elektrisch betätigbares Ventil 41 zugeordnet, welches ebenfalls als 3/2-Wegeventil ausgebildet ist. Ein Versorgungsanschluss 42 des elektrisch betätigbaren Ventils 41 ist mit der Entlüftungskammer 27 des Einlassventils 23 verbunden. Ein erster Arbeitsanschluss 45 ist mit der Druckmittelkammer 15 und ein zweiter Arbeitsanschluss 46 ist mit der Hauptentlüftung 16 verbunden. In einer ersten Ventilstellung verbindet das elektrisch betätigbare Ventil 41 den Versorgungsanschluss 42 und damit die Druckmittelkammer 15 mit der Entlüftungskammer 27 des Einlassventils 23. In der zweiten Ventilstellung verbindet das elektrisch betätigbare Ventil 41 den Versorgungsanschluss 42 mit der ins Freie führenden Entlüftung 16. Auf diese Weise kann das elektrisch betätigbare Ventil 41 die Entlüftungskammer 27 des Einlassventils 23 bedarfsweise belüften um ein Schließen des Einlassventils 23 während einer Entlüftung der angeschlossenen Verbraucher zu ermöglichen. (ABS-Funktion) .

Die elektrisch betätigbaren Ventile 33, 41 sind in einer Ventilkammer 43 aufgenommen, welche im Gehäuse 5 der Steuerventileinrichtung 3 im Bereich der Kontaktfläche 6 ausgenommen ist. Auf diese Weise sind die elektrischen Ventile leicht montierbar. Zudem kann beim Zusammensetzen der Gehäuse 4, 5 der Arbeitsventileinrichtung 2 und der Steuerventileinrichtung 3 über die Kontaktfläche 6 und entsprechende ringförmige Abdichtungen eine fluidische Verbindung zwischen dem Entlüftungsventil 33 und der zum Steuereingang 9 führenden Entlüftungsleitung 37 geschaffen werden.

In weiteren Ausführungsbeispielen sind an die Arbeitsventileinrichtung 2 mehrere im wesentlichen baugleiche Steuerventileinrichtungen 3 angeschlossen, so dass mehrere Druckmittelausgänge und daran angeschlossene Druckmittelverbraucher (insbesondere Bremskreise) mit Druckmittel versorgt und betätigt werden können. Dabei ist die Entlüftungskammer wenigstens eines Auslassventils, vorzugsweise mehrerer oder sämtlicher Auslassventile, über eine in den Steuereingang des Relaisventils mündende Entlüftungsleitung entlüftet.

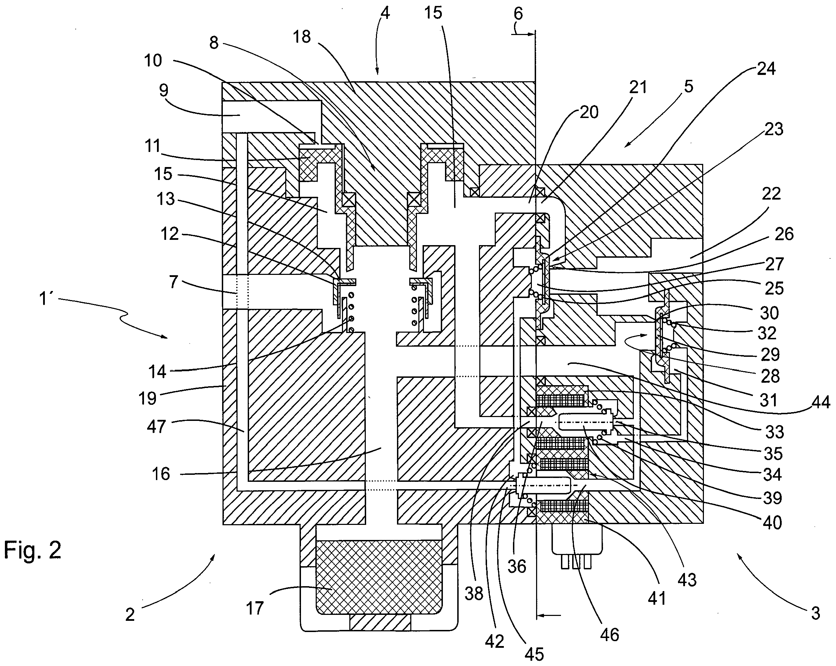

Fig. 2 zeigt ein Ausführungsbeispiel einer Ventileinrichtung 1' für eine druckbetätigte Bremseinrichtung eines Kraftfahrzeugs, welches bis auf die nachstehenden Unterschiede dem Ausführungsbeispiel gemäß Fig. 1 entspricht.

Die Ventileinrichtung 1'umfasst eine Arbeitsventileinrichtung 2, an die im Ausführungsbeispiel eine oder mehrere Steuerventileinrichtungen 3 angeschlossen sind. Im Unterschied zum Ausführungsbeispiel gemäß Fig. 1 ist die Entlüftungskammer 27 des Einlassventils 23 über das dem Einlassventil 23 zugeordnete elektrisch betätigbare 3/2-Wegeventil 41 mit dem Steuereingang 9 des Relaisventils 8 fluidisch verbindbar. Hierzu ist der erste Arbeitsanschluss 45 des elektrisch betätigbaren 3/2-Ventils 41 über eine Entlüftungsleitung 47 mit dem Steuereingang 9 und der zweite Arbeitsanschluss 46 mit der Arbeitsleitung 44 verbunden, welche mit der Hauptentlüftung 16 der Ventileinrichtung 1' kommuniziert. Der Versorgungsanschluss 48 des elektrisch betätigbaren 3/2-Ventils 41 ist mit der Entlüftungskammer 27 des Einlassventils 23 verbunden.

Das elektrisch betätigbare 3/2-Ventil 41 verbindet demnach die Entlüftungskammer 27 des Einlassventils 23 alternativ mit der Hauptentlüftung 16 oder dem Steuereingang 9 des Relaisventils 8.

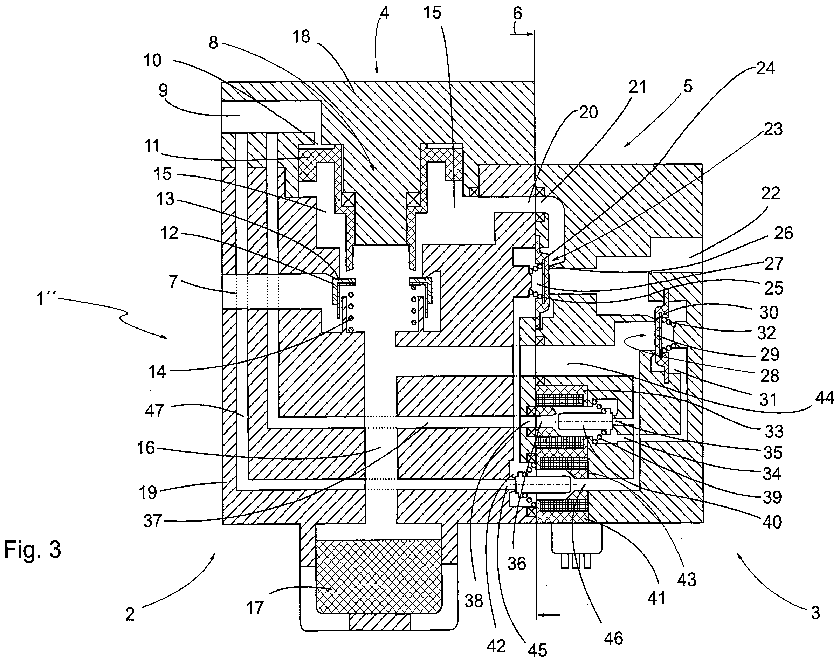

Fig. 3 zeigt ein Ausführungsbeispiel einer Ventileinrichtung 1" für eine druckbetätigte Bremseinrichtung eines Kraftfahrzeugs, welches bis auf die nachstehenden Unterschiede dem Ausführungsbeispiel gemäß Fig. 1 entspricht.

Im Ausführungsbeispiel gem. Fig. 3 sind sowohl die Entlüftungskammer 27 des Einlassventils 23 als auch die Entlüftungskammer 31 des Auslassventils 28 mit dem Steuereingang 9 des Relaisventils 8 mittels der jeweiligen elektrisch betätigbaren Ventile 33, 41 fluidisch verbindbar. Daher sind das elektrisch betätigbare Ventil 33 des Auslassventils 28 erfindungsgemäß über eine Entlüftungsleitung 37 und das elektrisch betätigbare Ventil 41 des Einlassventils 23 über eine Entlüftungsleitung 47 mit dem Steuereingang 9 verbunden.

Sind mehrere Steuerventileinrichtungen 3 vorgesehen, so können mehrere oder sämtliche Einlassventile und/ Auslassventile mit dem Steuereingang verbindbar angeordnet sein. Einzelne Einlassventile und / oder Auslassventile können in weiteren, nicht gezeigten Ausführungsbeispielen nach Bedarf bzw. Anforderungen des gewünschten Druckmittelverbrauchers in einer anderen Bauart als die des Membranventils konfiguriert sein.

## Patentansprüche

1. Ventileinrichtung für eine druckbetätigte Anlage, insbesondere die Bremsanlage eines Kraftfahrzeugs, mit einem Druckmitteleingang (7), an den eine Druckquelle anschließbar ist, und mit einem Relaisventil (8), welches den Druckmitteleingang (7) beherrscht und über einen Steuereingang (9) der Ventileinrichtung (1) betätigbar ist, wobei der Druck im Steuereingang (9) in einer Steuerkammer (10) auf einen längsbeweglich angeordneten Relaiskolben (11) wirkt, welcher das Betätigungsmittel für ein Ventilglied des Relaisventils (8) ist, welches als Ventilring (12) ausgebildet und auf einen Ventilsitz (13) von einer Ventilfeder (14) in Schließstellung gehalten ist, mit wenigstens einem Druckmittelausgang (22), an den ein Verbraucher anschließbar ist, mit pro Druckmittelausgang (22) einem druckbetätigten Auslassventil (28), welches eine fluidische Verbindung des Druckmittelausgangs (22) mit einer ins Freie führenden Hauptentlüftung (16) der Ventileinrichtung (1) beherrscht, sowie pro Druckmittelausgang (22) einem druckbetätigten Einlassventil (23), welches zwischen dem Relaisventil (8) und dem Druckmittelausgang (22) angeordnet ist, wobei wenigstens ein Auslassventil (28) und/oder wenigstens ein Einlassventil (23) als Membranventil ausgebildet ist und eine Ventilmembran (24, 29) als Verschlussglied aufweist, welche auf einem Ventilsitz (26, 30) aufliegt und gegen den Druck in einer Entlüftungskammer (31) des Auslassventils (28) bzw. gegen den Druck in einer Entlüftungskammer (27) des Einlassventils (23) öffnet, wobei jedem Membranventil ein elektrisch betätigbares Ventil (33, 41) zugeordnet ist, welches eine fluidische Verbindung der Entlüftungskammer (27, 31) mit einer Entlüftungsleitung beherrscht,
**dadurch gekennzeichnet, dass** die Entlüftungsleitung (37, 47) wenigstens eines Membranventils mit dem Steuereingang (9) des Relaisventils (8) fluidisch verbunden ist.

2. Ventileinrichtung nach Anspruch 1,
**dadurch gekennzeichnet, dass** jedes Auslassventil (28) als Membranventil ausgebildet ist und die jeweilige Entlüftungsleitung (37) mit dem Steuereingang (9) des Relaisventils (8) fluidisch verbunden ist.

3. Ventileinrichtung nach Anspruch 1 oder 2,
**dadurch gekennzeichnet, dass** jedes Einlassventil (23) als Membranventil ausgebildet ist und die jeweilige Entlüftungsleitung (47) mit dem Steuereingang (9) des Relaisventils (8) fluidisch verbunden ist.

4. Ventileinrichtung nach einem der vorhergehenden Ansprüche
**dadurch gekennzeichnet, dass** die Auslassventile (28) und/oder die Einlassventile (23) eine auf die Ventilmembran (24, 29) wirkende Ventilfeder (25, 32) aufweisen und gegen die Rückstellkraft der Ventilfeder (25, 32) öffnen.

5. Ventileinrichtung nach einem der vorhergehenden Ansprüche,
**dadurch gekennzeichnet, dass** die Ventileinrichtung (1, 1', 1") eine Arbeitsventileinrichtung (2) aufweist, dessen Gehäuse (4) den Druckmitteleingang (7), das Relaisventil (8), den Steuereingang (9), und die Entlüftungsleitungen (37, 47) umfasst, und dass die Ventileinrichtung (1, 1, 1") wenigstens eine Steuerventileinrichtung (3) aufweist, dessen Gehäuse (5) einen Druckmittelausgang (22), das dem Druckmittelausgang (22) zugeordnete Auslassventil (28), das dem Druckmittelausgang (22) zugeordnete Einlassventil (23) und die elektrisch betätigbaren Ventile (33, 41), sowie die fluidische Verbindung jedes elektrisch betätigbaren Ventils (33, 41) mit der Entlüftungskammer (31) des jeweils zugeordneten Membranventils (Einlassventil 23, Auslassventil 28) umfasst.

6. Ventileinrichtung nach Anspruch 5,
**dadurch gekennzeichnet, dass** die elektrisch betätigbaren Ventile (33, 41) im Bereich einer gemeinsamen Kontaktfläche der Gehäuse (4, 5) der jeweiligen Steuerventileinrichtung (3) und der Arbeitsventileinrichtung (2) angeordnet sind.

7. Ventileinrichtung nach einem der vorhergehenden Ansprüche,
**dadurch gekennzeichnet, dass** die elektrisch betätigbaren Ventile (33, 41) in einer Ventilkammer (43) des Gehäuses (5) der Steuerventileinrichtung (3) angeordnet sind.

8. Ventileinrichtung nach einem der Ansprüche 5 bis 7,
**dadurch gekennzeichnet, dass** die ins Freie führende Hauptentlüftung (16) über einen Schalldämpfer (17) am Gehäuse (4) mit einer Umgebung des Gehäuses (4) verbunden ist.

9. Ventileinrichtung nach einem der vorhergehenden Ansprüche,
**dadurch gekennzeichnet, dass** die elektrisch betätigbaren Ventile (33, 41) als 3/2-Wegeventile ausgebildet sind.

10. Ventileinrichtung nach Anspruch 9,
**dadurch gekennzeichnet, dass** Versorgungsanschlüsse (34) der elektrisch betätigbaren Ventile (33, 41) mit der Entlüftungskammer (27, 31) des jeweils zugeordneten Membranventils (23, 28) verbunden sind und alternativ über einen ersten Arbeitsanschluss (35) des jeweiligen elektrisch betätigbaren Ventils (33, 41) mit der ins Freie führenden Hauptentlüftung (16) oder über einen zweiten Arbeitsanschluss (36) mit dem Steuereingang (9) des Relaisventils (8) verbindbar sind.

11. Ventileinrichtung nach einem der Ansprüche 4 bis 10,
**gekennzeichnet durch** mehrere Steuerventileinrichtungen (3), welche an dieselbe Arbeitsventileinrichtung (2) angeschlossen sind.

## Claims

1. Valve apparatus for a pressure-actuated system, in particular the brake system of a motor vehicle, with a pressure medium input (7) to which a pressure source can be connected, and with a relay valve (8) which controls the pressure medium input (7) and can be actuated via a control input (9) of the valve apparatus (1), wherein the pressure in the control input (9) acts in a control chamber (10) on a relay piston (11) arranged to be linearly moveable, which relay piston (11) is the actuating means for a valve member of the relay valve (8), which is formed as a valve ring (12) and is held on a valve seat (13) by a valve spring (14) in the closed position, with at least one pressure medium output (22) to which a consumer can be connected, with for each pressure medium output (22) a pressure-actuated outlet valve (28) which controls a fluidic connection of the pressure medium output (22) to a main purge (16) leading to atmosphere of the valve apparatus (1), and for each pressure medium output (22) a pressure-actuated inlet valve (23) arranged between the relay valve (8) and the pressure medium output (22), wherein at least one outlet valve (28) and/or at least one inlet valve (23) is formed as a diaphragm valve and has as a closing member a valve diaphragm (24, 29) which lies on a valve seat (26, 30) and opens against the pressure in a purge chamber (31) of the outlet valve (28) or against the pressure in a purge chamber (27) of the inlet valve (23), wherein each diaphragm valve is assigned an electrically actuatable valve (33, 41) which controls a fluidic connection of the purge chamber (27, 31) to a purge line, **characterized in that** the purge line (37, 47) of at least one diaphragm valve is fluidically connected to the control input (9) of the relay valve (8).

2. Valve apparatus according to Claim 1,
**characterized in that** each outlet valve (28) is formed as a diaphragm valve and the respective purge line (37) is fluidically connected to the control input (9) of the relay valve (8).

3. Valve apparatus according to Claim 1 or 2,
**characterized in that** each inlet valve (23) is formed as a diaphragm valve and the respective purge line (47) is fluidically connected to the control input (9) of the relay valve (8).

4. Valve apparatus according to any of the preceding claims,
**characterized in that** the outlet valves (28) and/or the inlet valves (23) have a valve spring (25, 32) acting on the valve diaphragm (24, 29) and open against the return force of the valve spring (25, 32).

5. Valve apparatus according to any of the preceding claims,
**characterized in that** the valve apparatus (1, 1', 1") has a working valve device (2), the housing (4) of which comprises the pressure medium input (7), the relay valve (8), the control input (9) and the purge lines (37, 47), and that the valve apparatus (1, 1', 1") has at least one control valve device (3), the housing (5) of which comprises a pressure medium output (22), the outlet valve (28) assigned to the pressure medium output (22), the inlet valve (23) assigned to the pressure medium output (22), the electrically actuatable valves (33, 41) and the fluidic connection of each electrically actuatable valve (33, 41) to the purge chamber (31) of the respectively assigned diaphragm valve (inlet valve 23, outlet valve 28).

6. Valve apparatus according to Claim 5,
**characterized in that** the electrically actuatable valves (33, 41) are arranged in the region of a common contact face of the housing (4, 5) of the respective control valve device (3) and working valve device (2).

7. Valve apparatus according to any of the preceding claims,
**characterized in that** the electrically actuatable valves (33, 41) are arranged in a valve chamber (43) of the housing (5) of the control valve device (3).

8. Valve apparatus according to any of Claims 5 to 7,
**characterized in that** the main purge (16) leading to atmosphere is connected to an environment of the housing (4) via a silencer (17) on the housing (4).

9. Valve apparatus according to any of the preceding claims,
**characterized in that** the electrically actuatable valves (33, 41) are formed as 3/2-way valves.

10. Valve apparatus according to Claim 9,
**characterized in that** supply ports (34) of the electrically actuatable valves (33, 41) are connected to the purge chambers (27, 31) of the respectively assigned diaphragm valve (23, 28) and can be connected alternatively via a first working port (35) of the electrically actuatable valve (33, 41) to the main purge (16) leading to atmosphere or via a second working port (36) to the control input (9) of the relay valve (8).

11. Valve apparatus according to any of Claims 4 to 10,
**characterized by** a plurality of control valve devices (3) connected to the same working valve device (2).

## Revendications

1. Dispositif à soupapes pour un système actionné par pression, en particulier le système de freinage d'un véhicule automobile, comprenant une entrée de fluide sous pression (7) à laquelle peut être raccordée une source de pression, et une soupape relais (8), laquelle commande l'entrée de fluide sous pression (7) et peut être actionnée par le biais d'une entrée de commande (9) du dispositif à soupapes (1), dans lequel la pression dans l'entrée de commande (9) agit dans une chambre de commande (10) sur un piston de relais (11) disposé de manière mobile longitudinalement, lequel est le moyen d'actionnement pour un élément de la soupape relais (8), lequel élément est réalisé sous forme d'anneau de soupape (12) et est maintenu sur un siège de soupape (13) par un ressort de soupape (14) dans la position fermée, au moins une sortie de fluide sous pression (22) à laquelle un consommateur peut être raccordé, une soupape de sortie (28) actionnée par pression pour chaque sortie de fluide sous pression (22), laquelle soupape de sortie commande une liaison fluidique de la sortie de fluide sous pression (22) à un système de purge principal (16), menant à l'air libre, du dispositif à soupapes (1), ainsi qu'une soupape d'entrée (23) actionnée par pression pour chaque sortie de fluide sous pression (22), laquelle soupape d'entrée est disposée entre la soupape relais (8) et la sortie de fluide sous pression (22), dans lequel au moins une soupape de sortie (28) et/ou au moins une soupape d'entrée (23) sont réalisées sous forme de soupape à membrane et comprennent une membrane de soupape (24, 29) en tant qu'élément de fermeture, lequel repose sur un siège de soupape (26, 30) et s'ouvre à l'encontre de la pression dans une chambre de purge (31) de la soupape de sortie (28) ou à l'encontre de la pression dans une chambre de purge (27) de la soupape d'entrée (23), dans lequel une soupape (33, 41) pouvant être actionnée électriquement est associée à chacun soupape à membrane, laquelle soupape pouvant être actionnée électriquement commande une liaison fluidique de la chambre de purge (27, 31) à une conduite de purge,
**caractérisé en ce que** la conduite de purge (37, 47) d'au moins une soupape à membrane est reliée de manière fluidique à l'entrée de commande (9) de la soupape relais (8).

2. Dispositif à soupapes selon la revendication 1,
**caractérisé en ce que** chaque soupape de sortie (28) est réalisée sous forme de soupape à membrane et la conduite de purge (37) respective est reliée de manière fluidique à l'entrée de commande (9) de la soupape relais (8).

3. Dispositif à soupapes selon la revendication 1 ou 2,
**caractérisé en ce que** chaque soupape d'entrée (23) est réalisée sous forme de soupape à membrane et la conduite de purge (47) respective est reliée de manière fluidique à l'entrée de commande (9) de la soupape relais (8).

4. Dispositif à soupapes selon l'une des revendications précédentes,
**caractérisé en ce que** les soupapes de sortie (28) et/ou les soupapes d'entrée (23) comprennent un ressort de soupape (25, 32) agissant sur la membrane de soupape (24, 29) et s'ouvrent à l'encontre de la force de rappel du ressort de soupape (25, 32).

5. Dispositif à soupapes selon l'une des revendications précédentes,
**caractérisé en ce que** le dispositif à soupapes (1, 1', 1") comprend un dispositif de soupape de travail (2) dont le carter (4) comporte l'entrée de fluide sous pression (7), la soupape relais (8), l'entrée de commande (9) et les conduites de purge (37, 47), et **en ce que** le dispositif à soupapes (1, 1', 1") comprend au moins un dispositif de soupape de commande (3) dont le carter (5) comporte une sortie de fluide sous pression (22), la soupape de sortie (28) associée à la sortie de fluide sous pression (22), la soupape d'entrée (23) associée à la sortie de fluide sous pression (22) et les soupapes (33, 41) pouvant être actionnées électriquement, ainsi que la liaison fluidique de chaque soupape (33, 41) pouvant être actionnée électriquement à la chambre de purge (31) de la soupape à membrane respectivement associée (soupape d'entrée 23, soupape de sortie 28).

6. Dispositif à soupapes selon la revendication 5,
**caractérisé en ce que** les soupapes (33, 41) pouvant être actionnées électriquement sont disposées dans la région d'une surface de contact commune du carter (4, 5) du dispositif de soupape de commande (3) respectif et du dispositif de soupape de travail (2).

7. Dispositif à soupapes selon l'une des revendications précédentes,
**caractérisé en ce que** les soupapes (33, 41) pouvant être actionnées électriquement sont disposées dans une chambre de soupape (43) du carter (5) du dispositif de soupape de commande (3).

8. Dispositif à soupapes selon l'une des revendications 5 à 7,
**caractérisé en ce que** le système de purge principal (16) menant à l'air libre est relié à l'environnement du carter (4) par le biais d'un silencieux (17) sur le carter (4).

9. Dispositif à soupapes selon l'une des revendications précédentes,
**caractérisé en ce que** les soupapes (33, 41) pouvant être actionnées électriquement sont réalisées sous forme de soupapes à 3/2 voies.

10. Dispositif à soupapes selon la revendication 9,
**caractérisé en ce que** des raccords d'alimentation (34) des soupapes (33, 41) pouvant être actionnées électriquement sont reliés à la chambre de purge (27, 31) de la soupape à membrane (23, 28) respectivement associée et, en variante, peuvent être reliés, par le biais d'un premier raccord de travail (35) de la soupape (33, 41) pouvant être actionnée électriquement respective, au système de purge principal (16) menant à l'air libre ou, par le biais d'un deuxième raccord de travail (36), à l'entrée de commande (9) de la soupape relais (8).

11. Dispositif à soupapes selon l'une des revendications 4 à 10,
**caractérisé par** plusieurs dispositifs de soupape de commande (3), lesquels sont raccordés au même dispositif de soupape de travail (2).
